Europäisches Patentamt

European Patent Office

Office européen des brevets

(19)

(11) Publication number : **0 501 621 A2**

# (12) EUROPEAN PATENT APPLICATION

(21) Application number : **92300952.6**

(22) Date of filing : **04.02.92**

(51) Int. Cl.⁵ : **G06F 13/28**

(30) Priority : **26.02.91 US 661044**

(43) Date of publication of application :
**02.09.92 Bulletin 92/36**

(84) Designated Contracting States :
**DE FR GB**

(71) Applicant : **Hewlett-Packard Company**
**3000 Hanover Street**
**Palo Alto, California 94304 (US)**

(72) Inventor : **Clark, David S.**
**8300 Rifle Ridge Drive**
**Elverta California 95626 (US)**

(74) Representative : **Colgan, Stephen James et al**
**CARPMAELS & RANSFORD 43 Bloomsbury**
**Square**
**London WC1A 2RA (GB)**

(54) Address prediction and verification for burst cycle data reads.

(57)    Circuitry (118) facilitates a burst read of data from a memory (122). Addresses for each memory location are received by the circuitry (118) from a processor (113). For each word of data read from the memory (122), the circuitry (118) uses either an actual address received from the processor (113) to access memory from the memory (122), or generates a predicted address. The circuitry (118) uses the actual address from the processor (113) for reading a first address of data of the burst read and for subsequent addresses of data which had incorrectly predicted addresses. For other addresses to be read in the performance of the burst read, the circuitry (118), rather than waiting for an actual address from the processor (113), generates a predicted address for the read transaction. Data is obtained from the predicted address. In the meantime, an actual address for the read transaction is received from the processor (113). The predicted address is compared with the actual address. When the predicted address is equal to the actual address, the data is forwarded to the processor (113). When the predicted address is not equal to the actual address, the data is discarded.

FIG 2

EP 0 501 621 A2

## Background

The present invention concerns address prediction and verification for addresses which are generated as part of burst cycle transmission.

Within a computing system, a network adaptor card is generally used to interface an input/output (I/O) bus of the computing system with a local area network (LAN). The network adaptor card generally includes a front plane which interacts with the LAN, and a back plane which interacts with the I/O bus. A network processor is generally active on the adaptor card to oversee data transfer between the I/O bus and the local area network.

When the adaptor card performs a direct memory access (DMA) read of data from the computing system it is desirable for the processor to receive data directly from memory locations via the I/O bus. However, when particular processors are used, the length of time required to set up a data transfer over the I/O bus may cause the overall rate of transfer for a burst of data to be relatively slow. Such degradation of data transfer rate can be a serious impediment to the computing system.

One way that the burst rate of data transfer rate can be increased is to have a separate processor and memory on the network adaptor card dedicated to DMA data transfers. Such a dedicated processor and dedicated memory can assure that DMA transfers over the I/O bus are at the maximum rate supported by the I/O bus. However, the additional components required by such a solution can significantly increase the manufacturing cost of the network adaptor card.

## Summary of the Invention

In accordance with the preferred embodiment of the present invention, circuitry is presented which performs a burst read of data from a memory. Addresses for each memory location are received by the circuitry from a processor. For each word of data read from the memory, the circuitry uses either an actual address received from the processor to access memory from the memory, or generates a predicted address.

The circuitry uses the actual address from the processor for reading a first address of data of the burst read and for subsequent addresses of data which had incorrectly predicted addresses. In these cases the circuitry receives an actual address for a read transaction from the processor. The circuitry then accesses from the memory, data from the actual address. The data is forwarded to the processor.

For other addresses to be read in the performance of the burst read, the circuitry, rather than waiting for an actual address from the processor, generates a predicted address for the read transaction. The predicted address is generated, for example, by incrementing an immediately prior address used by the circuitry in an immediately prior read transaction. Data is obtained from the predicted address. In the meantime, an actual address for the read transaction is received from the processor. The predicted address is compared with the actual address. When the predicted address is equal to the actual address, the data is forwarded to the processor. When the predicted address is not equal to the actual address, the data is discarded.

In the preferred embodiment of the present invention a burst read is not permitted to be made across a page boundary of the memory. Therefore, the circuitry detects when the actual address is in a different memory page than an immediately prior address received from the processor for an immediately prior read transaction.

The present invention facilitates utilizing burst reads in the case where a processor does not generate an address until the processor receives data from an immediately prior read transaction. The present invention is advantageous over the prior art in that the burst reads are facilitated without the usage of a separate bus master or additional buffer memory.

## Brief Description of the Drawings

Figure 1 shows a block diagram of a prior art network adaptor card.

Figure 2 shows a block diagram of a network adaptor card in accordance with the preferred embodiment of the present invention.

Figure 3 shows address generator logic within the network adaptor card in accordance with the preferred embodiment of the present invention.

## Description of the Prior Art

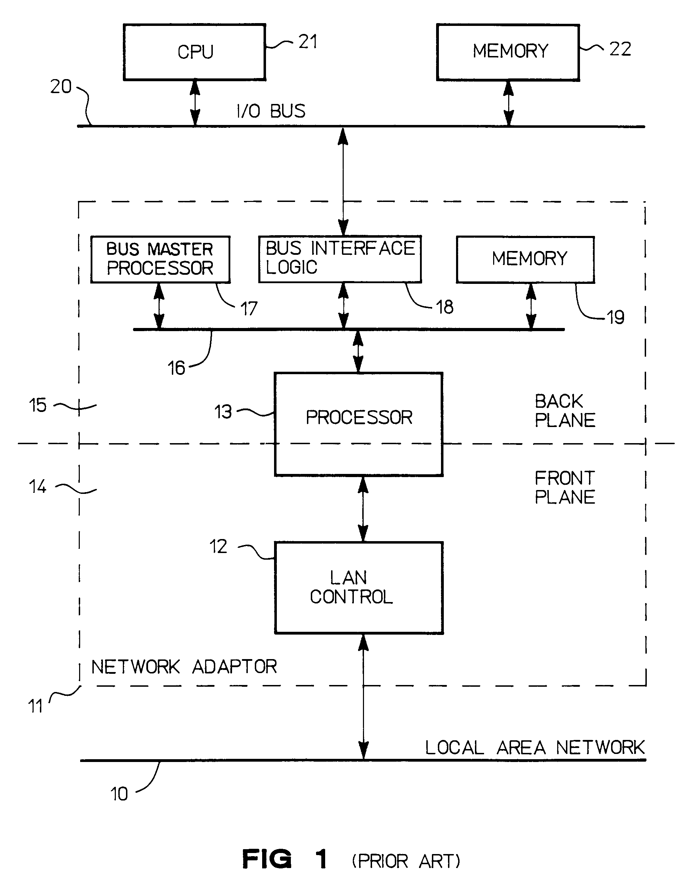

Figure 1 shows a block diagram of a prior art network adaptor card 11. Within a front plane 14 of network adaptor card 11, LAN circuitry 12 connects a network processor 13 with a local area network 10. Within a backplane 15 of network adaptor card 11, mastered DMA transfers from processor 13 to a memory 22 connected to an I/O bus 20 are controlled by a bus master processor 17. Data from memory 22 over I/O bus 20 is received through bus interface logic 18 and buffered in a memory 19, An internal bus 16 connects bus master 17, processor 13, bus interface logic 18 and memory 19. Other devices, such as a central processing unit (CPU) 21 are also connected to I/O bus 20.

## Description of the Preferred Embodiment

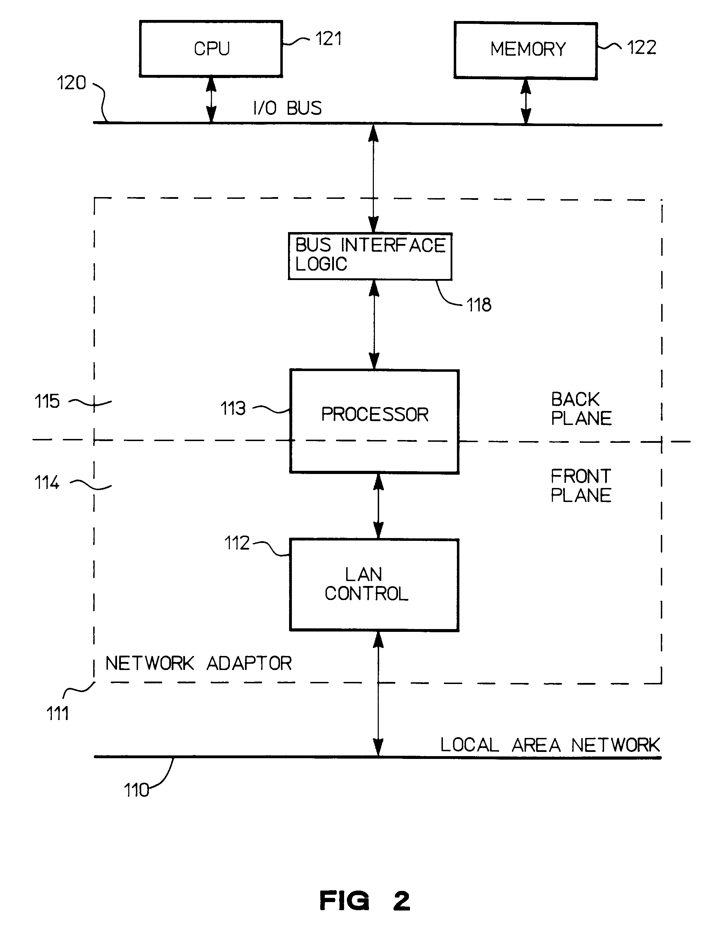

Figure 2 shows a block diagram of a network adaptor card 111 in accordance with the preferred embodiment of the present invention. Within a front plane 114 of network adaptor card 111, LAN circuitry 112 connects a network processor 113 with a local area network (LAN) 110. LAN 110 is for example an IEEE 802.3 thinLAN network. A network processor 113 provides processing power for data transfers for both front plane 114 and a backplane 115. Processor 113 is, for example, a 82596CA high performance 32-bit local area network co-processor available from Intel Corporation, having a business address of 3065 Bowers Ave., Santa Clara, CA 95051. Data transfers between processor 113 and an I/O bus 120 are performed through bus interface logic 118. I/O bus 120, for example, functions according to the Extended Industry Standard Architecture (EISA) bus protocol. Connected to I/O bus 120 is a memory 122 and a CPU 121.

When processor 113 performs a data read from memory 122 through I/O bus 120, processor 113 through bus interface logic 118 places a data address on bus 120. In accordance with EISA bus protocol, during burst mode, within a cycle of EISA clock (BCLK), bus 120 returns to bus interface logic 118 data from the data address. Bus interface logic 118 then forwards the data to processor 113.

Using burst transmission data mode, it is possible to perform a data read over I/O bus 120 for every cycle of BCLK. However, processor 113 does not produce a new address for a data read until data from a prior read is received. Therefore, processor 113 is not able to supply data addresses to I/O bus 120 soon enough to take advantage of the burst transmission mode. At best, then, processor 113 operating under normal circumstances is only able to supply addresses soon enough to allow transfer of data from memory 122 onto I/O bus 120 during every other cycle of BCLK. As discussed above, it is for this reason that some prior art network adaptor cards utilize a bus master processor 17. Such a bus master can buffer data in a memory 19, allowing utilization of burst mode of I/O bus 20.

In the preferred embodiment of the present invention, however, an address generator within bus interface logic 118 is used to predict the address in memory 122 from which processor 113 will make the next data read. A read from memory 122 onto I/O bus 120 to bus interface logic 118 is performed using the predicted address. When processor 113 presents an actual data address, the actual data address is compared to the predicted address. If the actual address is equal to the predicted address, the data read by bus interface logic 118 is forwarded to processor 113. If the actual address is not equal to the predicted address, the data read by bus interface logic 118 is discarded and data is read from memory 122 onto I/O bus 120 to bus interface logic 118 using the actual address from processor 113.

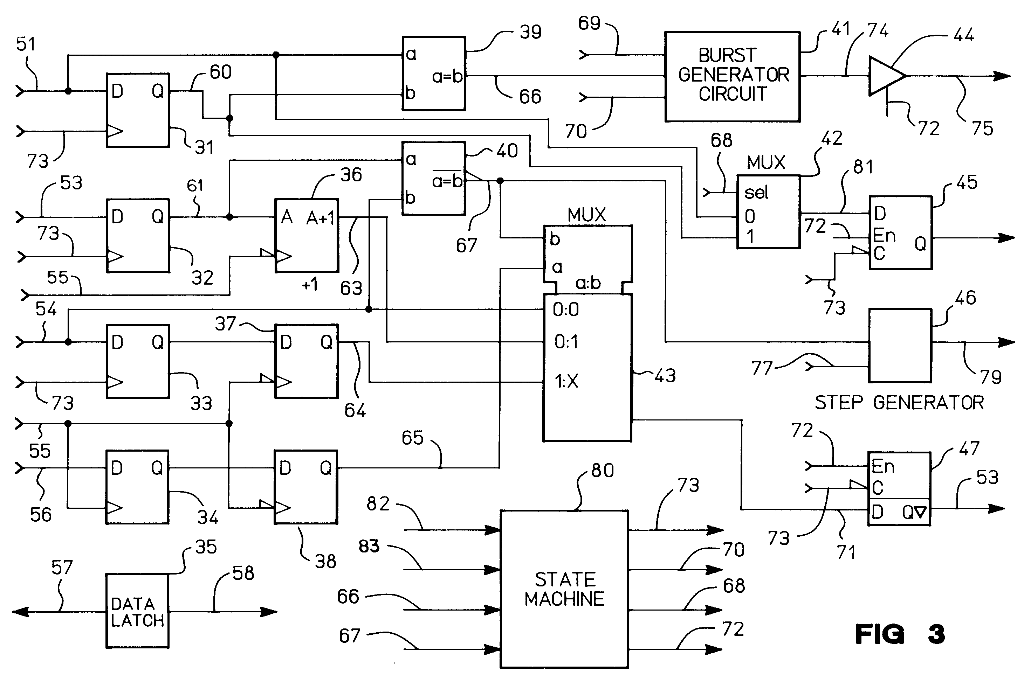

Figure 3 shows address generator logic which performs the address generation described above. In the preferred embodiment of the present invention, each byte of data has a 32-bit address A[31:0]. The bytes are arranged in 32-bit words. Memory accesses performed by network adaptor 111 over bus 120 are always done one 32-bit word at a time; therefore, only the high order 30 bits A[31:2] of an address are used for each access. The low order address bits A[1:0] are always at logic 0. When processor 113 requests less than a full 32-bit word of data, the full 32-bit word is retrieved by network adaptor 111; however, processor 113 only receives the byte of data requested and ignores the remainder of the retrieved 32-bit word.

Within bus interface logic 118, address lines 52 receive the high order 22 address bits A[31:10] from processor 113. The high order 22 address bits A[31:10] of a 32-bit data word are handled separately than the low order 8 bits of address A[9:2]. This is because in the preferred embodiment, the EISA bus protocol is used which does not allow burst data transfers which cross a page boundary. A data page is 1K bytes (256 32-bit words). Therefore, when performing a burst transfer, only low order 8 bits of address A[9:2] need be predicted. Any change in the high order 22 bits of address A[31:10] indicates a page boundary has been crossed. Detection of the crossing of a page boundary results in an immediate suspension of the burst mode.

Logic circuitry that checks for an attempt to cross a page boundary on a burst data transfer is as follows. A storage circuit 31 receives the high order 22 address bits A[31:10] on address lines 51 from processor 113. Storage circuit 31 functions as a clocked register functionally equivalent to a plurality of delay (D) flip-flops, a separate D flip-flop being used for each of address lines 51. A clock signal LAClk is placed on a clock line 73 connected to storage circuit 31. LAClk is generated by a state machine 80. Storage circuit 31 places a stored address SLA[31:10] on Q output lines 60.

A comparator 39 compares address A[31:10] on lines 53 with stored address SLA[31:10] on lines 60. When the addresses are equal, this means that a page boundary has not been crossed. Therefore, comparator 39 will place a logic 1 (HiMatch) on a line 66. A burst generator circuit 41 receives line 66. Burst generator circuit 41 also receives on a line 69 a burst ready signal (SLBurstN) from bus 120 and receives on a line 70 a burst ready signal (T2BurstN) from state machine 80. When all three signals received by burst generator circuit 41 allow a burst, burst generator circuit 41 produces a (MSBurst) signal on an output line 74. The signal (MSBurst) on line 74 is gated through a tristate gate 44 to a line 75 connected to bus 120. Tri-state gate 44 is controlled by an enable signal on an enable line 72 generated by state machine 80.

For each read or write, the high order address bits are selected as follows. A multiplexor 42 selects address A[31:10] on lines 51 or stored address SLA[31:10] on lines 60 based on a selection signal (strLA) on a line 68. The selection signal (strLA) on line 68 is generated by state machine 80. During a burst transmission, after the first read, multiplexor 42 selects stored address SLA[31:10] on lines 60. Otherwise, multiplexor 42 selects address A[31:10] on lines 53. The selected address is placed on lines 81 which are used as input to a latch 45. Latch 45 is clocked by clock signal LAClk placed on clock line 73. An enable input of latch 45 is connected to state machine 80 through enable line 72. Address bits LA[31:10] on lines 78 are forwarded to bus 120 and serve as high order address bits for the current read from or write to bus 120.

During a read burst data transfer (also referred to as a burst read), a next address is predicted before it is received from processor 113. The data is not forwarded to processor 113 until it is determined whether the predicted address was the correct address. If the predicted address is correct, the data is received by processor 113. If the predicted address was incorrect, than the data read from bus 120 is discarded and new data is read using the address actually generated by processor 113.

Since a burst data transfer cannot cross a page boundary, it is only necessary to do an address prediction using the low order eight bits of a word address. The logic that checks to see if the predicted address was the correct one is as follows. On lines 53 are low order address bits LA[9:2]. These are the address bits actually forwarded to bus 120 and serve as low order address bits for the current read from bus 120 or write to bus 120. Address lines 53 are also connected to a storage circuit 32. Storage circuit 32 is clocked by LAClk, placed on line 73. Storage circuit 32 produces a stored address SLA[9:2] on lines 61. In essence, during a burst read, the address on SLA[9:2] is the low order address bits used in the last transaction on bus 120.

A comparator 40 compares stored address SLA[9:2] on lines 61 with the low order 8 address bits A[9:2] on address lines 54 from processor 113. If, during a burst read cycle, these two are not equal, it means that the address last used for a transaction over bus 120 was not the address from which processor 113 seeks to read data. Comparator 40, therefore, places a logic 1 (LoMatchN) on a line 67, indicating an invalid address. If comparator 40 finds that the stored address SLA[9:2] on lines 61 is equal to the low order 8 address bits A[9:2] on address lines 54 from processor 113, then comparator 40 places a logic 0 on control line 67. This indicates that low order address lines LA[9:2] placed on lines 53 was a valid address for a burst read.

The control signal on control line 67 is forwarded to a step generator 46. Step generator 46, in response to a logic 0 on control line 67 and to ADSn signal on line 77 generates a RDYn signal on a line 79. This signal is received by processor 113 and indicates to processor 113 that data received from memory 122 on I/O bus 120 on the last read cycle is valid. The data is then read into processor 113. The ADSn signal on line 77 is from processor 113 and indicates processor 113 has placed a valid address A[31:2] on address lines 51 and 54.

The address prediction is done as follows. An incrementer 36 receives stored address SLA[9:2] on lines 61, and increments stored address SLA[9:2] to produce a predicted address PA[9:2] placed on lines 63. Incrementer 36 is clocked by a signal BCLK on a line 55. BCLK is generated by bus 120.

During a burst read, the first address is read directly from the address bits generated by processor 113. Afterwards, as long as the burst read continues and as long as the last predicted address was correct, the predicted address is used to perform a read. When a predicted address is incorrect, the data is discarded and a next read is performed using the address bits generated by processor 113. The selection of the low order bits of the address is performed by a multiplexor 43. During a burst read a W/Rn enable signal on line 65 is at logic 0. Multiplexor 43, therefore, selects either address bits A[9:2] on lines 54 or address bits PA[9:2] on lines 63, depending upon the control signal on line 67.

For a write cycle there is no need to predict addresses. Therefore, the logic is straightforward. For a write cycle, address bits A[9:2] are delayed two clock cycles by a storage circuit 33 and a storage circuit 37 before being placed on lines 64. Storage circuit 33 is clocked by LAClk on line 73. Storage circuit 37 is clocked by BCLK on line 55. A W/Rn enable signal on line 56 is also delayed two cycles of BCLK by a storage circuit 34 and a storage circuit 38 before being placed on line 65. On a write signal, the delayed W/Rn enable signal on line 65 is asserted high and multiplexor 43 selects the write address WA[9:2] on lines 64.

For both a read and a write, the low order bits of the address selected by multiplexor 43 is forwarded to lines 71. A transparent latch 47 receives the low order bits of the selected address on lines 71 and forwards the low order address bits LA[9:2] on lines 53 to bus 120. An enable input of latch 47 is connected to state machine 80 through enable line 72. Latch 47 is clocked by clock signal LAClk placed on clock line 73.

During a read cycle, data D[31:0] from bus 120 is received by data latch 35 on lines 57. Data latch 35 places the data received from data lines 57 onto data lines 58, which are connected to data input/output lines of processor 113. This data will be either discarded, or will be received by processor 113 in response to a RDYn signal on line 79.

During a write cycle, data D[31:0] from processor 113 is received by data latch 35 on data lines 58. Data latch 35 places the data received from data lines 58 onto data lines 57, which are connected to data lines of bus 120. During the write cycles, data is pipelined through data latch 35 so as to arrive at bus 120 in synchronization with the write address.

State machine 80 serves to translate timing cycles of processor 113 to timing cycles compatible with bus 120. A simplified discussion of the operation of state machine 80 follows. State machine 80 has three primary states. In the first state, state machine 80 is idle, waiting for processor 113 to begin a data transfer. State machine 80 is in the second state when processor 113 is performing non-burst transfers. State machine 80 is in the third state when processor 113 is performing burst transfers.

When processor 113 is not performing any transfers, state machine 80 places a disable signal on enable line 72, causing the signals on lines 53, lines 78 and line 75 to be tri-stated. When processor wants to begin a transfer, processor 113 will assert a hold signal on a line 82. State machine 80 will then enter the second state. Prior to beginning an I/O transfer over bus 120, state machine 80 will assert an enable signal over enable line 72. At the same time that the enable signal is asserted, state machine 80 asserts LAClk over line 73. The first transfer will be a standard transfer requiring two cycles of BCLK. LAClk will assert relative to the falling edge of BCLK to update the address LA[31:2] on lines 78 and lines 53. State machine 80 receives bus control signals, including BCLK and SLBurstN through inputs 83.

After the first standard transfer, state machine 80, based on values of HiMatch on line 66, LoMatchN on line 67 and SLBurstN from lines 83, will enter the third state. When in the third state, state machine 80 will assert T2BurstN on line 70. This indicates to burst generator circuit 41 that subsequent transfer will be burst transfers. State machine 80 will remain in the third state until processor 113 de-asserts the hold signal on line 82 or another standard non-burst cycle must be performed, e.g., because of the crossing of a page boundary.

State machine 80 generates signal strLA on line 68 to indicate whether address A[31:10] on lines 51 or stored address SLA[31:10] on lines 60 should be placed on lines 78 and forwarded to bus 120 as address bits LA[31:10].

**Claims**

1. Circuitry (118) which, over a bus (120), reads data from a memory (122) and forwards the data to a processor (113), the circuitry (118) comprising:
    processor address lines (51,54), coupled to the processor (113), on which the processor (113) places an actual address for a data read;
    bus address lines (53,75), coupled to the bus (120), on which is placed a memory address for a memory read over the bus (120);
    generating means (32,36), coupled to the processor address lines (51,54), for generating a predicted address based on the memory address for an immediately prior memory transaction;
    selecting means (43), coupled to the processor address lines (51,54), the generating means (32,36) and the bus address lines (53,75), for selecting a first of the actual address and the predicted address to be placed on the bus address lines (53,75) as the memory address;
    comparing means (40), coupled to the generating means (32,36) and the processor address lines (51,54), for comparing the memory address for the immediately prior memory transaction with the actual address; and,
    signal generating means (46), coupled to the comparing means (40) and the processor (113) for forwarding a data ready control signal to the processor (113) based on an output of the comparing means (40).

2. Circuitry (118) as in claim 1, additionally comprising:
    data latches (35) for receiving read data from the bus (120) and placing the read data on data lines (58) of the processor(113).

3. Circuitry (118) as in claim 1 wherein the generating means (32,36) comprises an incrementer (36) which increments a portion of the memory address for the immediately prior memory transaction.

4. Circuitry (118) as in claim 3 wherein the generating means (32,36) additionally comprises storing means (32), coupled to the incrementer (36), for storing the portion of the memory address for the immediately prior memory transaction.

5. Circuitry (118) as in claim 1 wherein, for a first read access in a burst read, the selecting means (43) selects the actual address, and for subsequent read accesses in the burst read which do not cross a page boundary, the selecting means (43) selects the predicted address until the comparing means (40) indicates the memory address for the immediately prior memory transaction does not equal the actual address.

6. Circuitry (118) as in claim 1 additionally comprising:
    detection means (31,39), coupled to the processor address lines (51,54), for detecting when a read transaction crosses a page boundary.

7. Circuitry (118) as in claim 6 wherein the detection means (31,39) comprises:

    storing means (31) for storing high-order bits of the memory address for the immediately prior memory transaction; and,

    high-order bit comparing means (39), coupled to the storing means and to the processor address lines (51,54), for comparing stored high order bits from the storing means (31) with high order address bits on the processor address lines (51,54).

8. In a computing system, a method for reading data from a memory (122) connected to a bus (120) and forwarding the data to a processor (113), the method being performed by circuitry (118) in the computer system and comprising the steps of:

    (a) generating a predicted address for a read transaction from the memory (122) over the bus (120);

    (b) obtaining data from the predicted address;

    (c) receiving an actual address for the read transaction from the processor (113);

    (d) comparing the predicted address with the actual address;

    (e) when the predicted address is equal to the actual address, forwarding the data obtained in step (b) to the processor (113); and,

    (f) when the predicted address is not equal to the actual address, discarding the data obtained in step (b).

9. A method as in claim 8 additionally comprising the step of:

    (g) detecting when the actual address is in a different memory page than an immediately prior address received from the processor (113) for an immediately prior read transaction.

10. A method as in claim 8 wherein in step (a) the predicted address is generated by incrementing an immediately prior address used by the circuitry (118) in an immediately prior read transaction.

11. In a computing system, a method for performing a burst read of data from a memory (122) and forwarding the data to a processor (113), the method being performed by circuitry (118) in the computer system and comprising the steps of:

    (a) for a first address of data to be read in the performance of the burst read and for subsequent addresses of data which are incorrectly predicted, performing the following substeps:

        (a.1) receiving an actual address for a read transaction from the processor (113),

        (a.2) accessing from the memory (122), data from the actual address received from the processor (113), and

        (a.3) forwarding the data received in step (a.2) to the processor (113); and,

    (b) for addresses to be read in the performance of the burst read for which the substeps of step (a) are not performed, performing the following substeps:

        (b.1) generating a predicted address for a read transaction from the memory (122),

        (b.2) obtaining data from the predicted address,

        (b.3) receiving an actual address for the read transaction from the processor (113),

        (b.4) comparing the predicted address with the actual address,

        (b.5) when the predicted address is equal to the actual address, forwarding the data obtained in step (b.2) to the processor (113) and

        (b.6) when the predicted address is not equal to the actual address, discarding the data obtained in step (b.2).

12. A method as in claim 11 wherein a burst read is not permitted to be made across a page boundary of the memory (122).

13. A method as in claim 11 wherein in substep (b.1) the predicted address is generated by incrementing an immediately prior address used by the circuitry (118) in an immediately prior read transaction.

**FIG 1** (PRIOR ART)

**FIG 2**

FIG 3

EP 0 501 621 A2